**Europäisches Patentamt**

**European Patent Office**

**Office européen des brevets**

(19)

(11) Numéro de publication : **0 022 703**
**B1**

# FASCICULE DE BREVET EUROPÉEN

(12)

(45) Date de publication du fascicule du brevet :
**15.12.82**

(51) Int. Cl.³ : **G 01 C 21/22**

(21) Numéro de dépôt : **80400997.5**

(22) Date de dépôt : **01.07.80**

(54) **Dispositif indicateur cartographique destiné à la navigation, plus particulièrement à la navigation aérienne.**

(30) Priorité : **06.07.79 FR 7917601**

(43) Date de publication de la demande :
**21.01.81 (Bulletin 81/03)**

(45) Mention de la délivrance du brevet :
**15.12.82 Bulletin 82/50**

(84) Etats contractants désignés :
**DE GB NL SE**

(56) Documents cités :
**FR A 2 063 563**
**US A 3 507 993**
**IBM TECHNICAL DISCLOSURE BULLETIN,**
**vol. 18, no. 3, juin 1975 NEW YORK (US)**
**M.K. BUSH et al. : « Display of Stored Images »**
**pages 272-273.**

(73) Titulaire : **THOMSON-CSF**
**173, Boulevard Haussmann**
**F-75379 Paris Cedex 08 (FR)**

(72) Inventeur : **Girault, Hervé**
**"Thomson-CSF" SCPI 173, bld Haussmann**
**F-75360 Paris Cedex 08 (FR)**
Inventeur : **Reymond, Jean-Claude**
**"THOMSON-CSF" SCPI 173, bld Haussmann**
**F-75360 Paris Cedex 08 (FR)**
Inventeur : **Gauzan, Pierre**
**"THOMSON-CSF" SCPI 173, bld Haussmann**
**F-75360 Paris Cedex 08 (FR)**

(74) Mandataire : **Trocellier, Roger et al**
**THOMSON-CSF SCPI 173, Bld Haussmann**
**F-75379 Paris Cedex 08 (FR)**

Dispositif indicateur cartographique destiné à la navigation, plus particulièrement à la navigation aérienne.

La présente invention concerne un dispositif indicateur cartographique permettant la visualisation combinée d'une carte mobile et d'informations de navigation.

L'invention s'applique plus particulièrement à la réalisation d'un dispositif indicateur électronique de navigation aérienne. Un indicateur cartographique est destiné principalement à présenter au pilote de l'avion la carte géographique de la zone survolée. La carte doit défiler en correspondance avec le vol et son positionnement est commandé automatiquement selon deux directions cartésiennes X et Y en fonction respectivement de la longitude et de la latitude de l'avion. En outre, il peut être tenu compte du cap de l'avion pour commander en rotation θ la position de la carte. Les données de latitude, longitude et cap sont fournies par le dispositif de navigation de l'avion (capteurs, centrale à inertie, etc...). L'indicateur cartographique comporte des moyens de calcul (calculateur de bord, circuits de calcul spécialisés, etc...) qui, à partir des données de navigation, commande des asservissements de position de la carte visualisée en X, Y et θ.

Outre la visualisation d'une carte géographique ou autre, le dispositif produit un repère qui indique le point figuratif de l'avion, ou encore un but à atteindre ou tout autre point particulier.

Il s'est avéré utile dans la pratique de visualiser encore d'autres informations, relatives à la navigation, par exemple la vitesse, la consommation de carburant, la route à suivre, etc... Ces informations sont assez fréquemment produites par visualisation cathodique, le tracé s'effectuant selon le mode de balayage aléatoire, dit cavalier, pour former les symboles (vecteurs, cercles, etc...) ou les caractères alpha-numériques à visualiser.

Il est connu de produire des informations de navigation et autres, informations tactiques par exemple, combinées à celle de la carte géographique de la région survolée sur un seul tube à rayons cathodiques. Selon une technique connue correspondante, décrite notamment dans le brevet USA 3 507 993, l'information de carte est enregistrée à l'avance en fonction de la route à suivre et stockée sous forme vidéo sur une bande magnétique pour les zones géographiques devant être traversées durant la mission envisagée. La bande vidéo est disposée à bord dans un dispositif de lecture synchronisé avec le déplacement de l'avion par rapport au sol en sorte de produire en surimpression durant la mission, les informations tactiques et de navigation combinées à celles de carte sur l'écran du tube cathodique.

Cette solution présente des inconvénients liés au fait que l'enregistrement reste assez sensiblement limité aux zones de survol correspondant à la mission. A chaque nouvelle mission comportant un itinéraire différent, il faut donc faire un nouvel enregistrement. L'enregistrement d'une carte géographique très étendue répondant à de multiples routes et missions ne peut être envisagé, compte tenu principalement des temps d'accès trop élevés et de la complexité accrue du codage.

Un objet de la présente invention est de remédier à ces limitations en utilisant notamment une mémoire de masse de grande capacité et d'accès rapide, du type vidéo-disque, autorisant l'enregistrement d'une carte de très grande étendue et une grande souplesse d'exploitation.

Selon la présente invention, il est réalisé un indicateur cartographique du type comportant des moyens de stockage et de lecture de la carte enregistrée sous forme d'un signal vidéo adapté à la visualisation envisagée et de signaux codés de position, des moyens générateurs de symboles notamment d'un symbole de position véhicule des moyens de visualisation combinée de la vidéo de carte et des symboles, des moyens de calcul et de gestion pour commander en fonction de la position véhicule d'une part la lecture de la carte stockée et sélectionner la vidéo correspondant à la zone parcourue, d'autre part, le générateur de symboles pour extraction des symboles désirés ; il est caractérisé en ce que les moyens de stockage et de lecture sont réalisés sous forme d'un dispositif vidéo-disque où la carte est enregistrée zone par zone en décomposant la carte en deux réseaux de bandes adjacentes et parallèles à une première direction Y de référence, ces réseaux étant décalés l'un par rapport à l'autre selon la deuxième direction X de référence orthogonale à la précédente en sorte que les bandes respectives se chevauchent selon la direction de décalage, les signaux codés de position correspondant à la latitude et à la longitude de chaque zone, ledit signal vidéo de carte étant transmis à la visualisation à travers un dispositif mémoire intermédiaire de capacité supérieure à celle de l'image à visualiser pour permettre une visualisation sans discontinuité de la zone parcourue compte tenu du déplacement du véhicule.

Les particularités et avantages de la présente invention apparaîtront dans la description qui suit, donnée à titre d'exemple non limitatif, à l'aide des figures annexées qui représentent :

la figure 1  un diagramme général d'un dispositif indicateur cartographique conforme à l'invention ;

la figure 2,  un schéma relatif à l'enregistrement effectué sur une mémoire de masse du type disque vidéo ;

les figures 3 et 4,  des schémas relatifs à la décomposition de la carte en zones en vue enregistrement et à une localisation possible correspondante sur le disque vidéo ;

la figure 5,  un schéma relatif à la mémoire intermédiaire utilisée dans le dispositif ;

la figure 6,  un diagramme selon la fig. 1, dans lequel les dispositifs mémoires sont détaillés ;

la figure 7,  un diagramme partiel relatif à un mode de réalisation des circuits de commande du dispositif vidéo-disque.

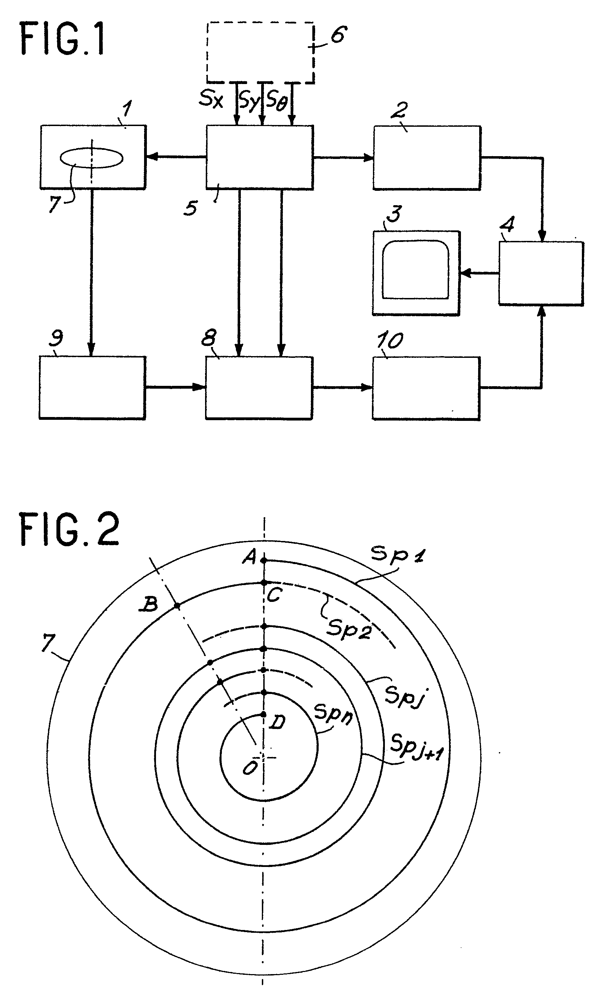

Suivant le diagramme général de la fig. 1, le dispositif indicateur cartographique comporte en combinaison : des moyens de stockage et de lecture 1 de la carte enregistrée sous forme d'un signal vidéo adapté à la visualisation prévue, par exemple une image de télévision résultant d'un balayage ligne par ligne de l'écran d'un moniteur ; des moyens générateurs de symboles 2 élaborant en particulier un repère figuratif de la position avion dans l'image visualisée ; des moyens de visualisation combinée de la vidéo de carte et des symboles, représentés par un dispositif de visualisation 3, tel un moniteur de télévision, et un circuit mélangeur 4, ou autre, pour combiner la vidéo de carte et la vidéo de symbole destinée à la représentation ; des moyens de calcul et de gestion de l'ensemble pour commander d'une part, le dispositif de lecture de carte en 1 et sélectionner la vidéo de carte correspondant à la zone de survol et, d'autre part, le générateur de symboles pour extraction des symboles désirés au fur et à mesure du vol, ces moyens sont symbolisés par un bloc 5 pouvant essentiellement consister en un microprocesseur qui reçoit les données de position avion SX, SY et S$\theta$ des appareils annexes 6 installés à bord et faisant partie du dispositif de navigation. Les signaux SX et SY correspondant à la latitude et à la longitude et S$\theta$ au cap de l'avion.

Conformément à l'invention, la mémoire en 1 utilisée pour stocker la carte est réalisée sous forme d'un disque vidéo 7 dont la lecture s'effectue au fur et à mesure des besoins. Le bloc 1 représente un dispositif vidéo-disque avec ses moyens de lecture et d'entraînement du disque vidéo.

Suivant une autre particularité de l'invention, le signal de carte extrait par lecture commandée du disque n'est pas transmis directement à l'organe de visualisation 3. Un dispositif mémoire intermédiaire 8 est interposé sur cette liaison. Cette mémoire présente une capacité supérieure à celle de l'image à visualiser sur l'écran en 3, son accès à l'écriture est aléatoire et sa lecture séquentielle au rythme de la visualisation. L'organe de gestion 5 élabore des signaux de commande correspondants pour piloter l'écriture et la lecture de la mémoire 8 en fonction des données X, Y et $\theta$. Comme il apparaîtra ultérieurement, l'introduction de la mémoire 8 dans la combinaison permet de limiter la lecture du vidéo-disque car seuls des signaux vidéo de rafraîchissement de la mémoire 8 sont à extraire en fonction de l'évolution de l'avion, elle permet également de résoudre le problème de continuité de la visualisation et de tenir compte du paramètre $\theta$ de cap.

La combinaison est complétée par un circuit de conversion analogique-numérique et de codage 9 des informations extraites du vidéo-disque en vue de leur inscription dans la mémoire intermédiaire 8 ; de même, un circuit de décodage et de conversion numérique-analogique 10 est prévu pour traiter les données extraites de la mémoire intermédiaire 8 en vue de visualiser la carte sur l'indicateur 3. Les connexions entre les blocs 5 et 8 symbolisent les commandes d'écriture et de lecture de la mémoire intermédiaire 8.

Le dispositif indicateur cartographique utilise la mémoire de masse 1 du type vidéo-disque qui est lue au fur et à mesure de besoins par une commande appropriée, élaborée par les circuits de gestion et de calcul 5 en fonction des paramètres de position de l'avion. L'avantage est indéniable, le nombre d'images stockées sur un disque vidéo 7 est très important, pouvant être de 50 000 images, ce qui confère à la mémoire 1 une densité très élevée. A titre d'exemple, pour visualiser des images de 13 × 18 cm sur l'écran de l'indicateur 3 d'une carte à l'échelle 1/25 000$^e$, le disque vidéo peut mémoriser une carte totale couvrant une surface au sol de 8 500 × 8 500 km environ. Selon une forme de réalisation non limitative, le disque 7, généralement en matière plastique, supporte l'enregistrement de la carte qui s'y trouve inscrit sous forme de sillons formant une spirale. Le disque est entraîné en rotation, par exemple à 25 tours par seconde, un tour correspondant à l'enregistrement d'une image vidéo. L'inscription du signal vidéo s'effectue par une succession de microcuvettes de longueur et d'espacement variables le long de chaque spire, constituant un sillon. Le pas de la spirale est d'environ 1,6 $\mu$m et la largeur des microcuvettes de 0,6 $\mu$m environ. Un disque de 30 cm de diamètre peut comporter 50 000 spires d'enregistrement.

Suivant la figure 2, les spires $SP_I$ à $SP_n$ constituant la gravure, se répartissent entre la première spire $SP_I$, de plus grand rayon OA et la dernière $SP_n$ de plus petit rayon OD. Un secteur de chaque spire est réservé pour y enregistrer des signaux autres que la vidéo image, tels que l'information numéro d'image et la synchronisation de trame. Ce secteur est représenté par la partie BC de la spire $SP_I$, l'image vidéo et la synchronisation ligne étant enregistrées sur la partie AB selon des techniques connues, avec ou sans entrelacement d'images.

Le dispositif indicateur cartographique, objet de l'invention, est prévu pour former l'image de carte géographique correspondant à tout instant à une région bien précise, celle survolée par l'aéronef, avec un point figuratif avion parfaitement repéré et la carte orientée dans une direction prédéterminée, par exemple celle des méridiens géographiques correspondant à l'axe vertical de symétrie de l'écran d'affichage (représentation NORD en haut de l'image, NORD-SUD vertical), ou la direction du cap de l'avion dans cette même direction (représentation CAP en haut, route verticale). De ce fait, l'image de la carte doit être susceptible de trois mouvements indépendants : verticalement en Y et horizontalement en X (mouvements cartésiens) et angulairement en $\theta$ (mouvement polaire, pour la représentation CAP en haut).

Pour obtenir ces résultats, la carte est enregistrée zone par zone, les zones étant successives selon l'une des directions cartésiennes de référence, Y par exemple, et se chevauchant partiellement de l'une à la suivante selon la deuxième direction de référence X.

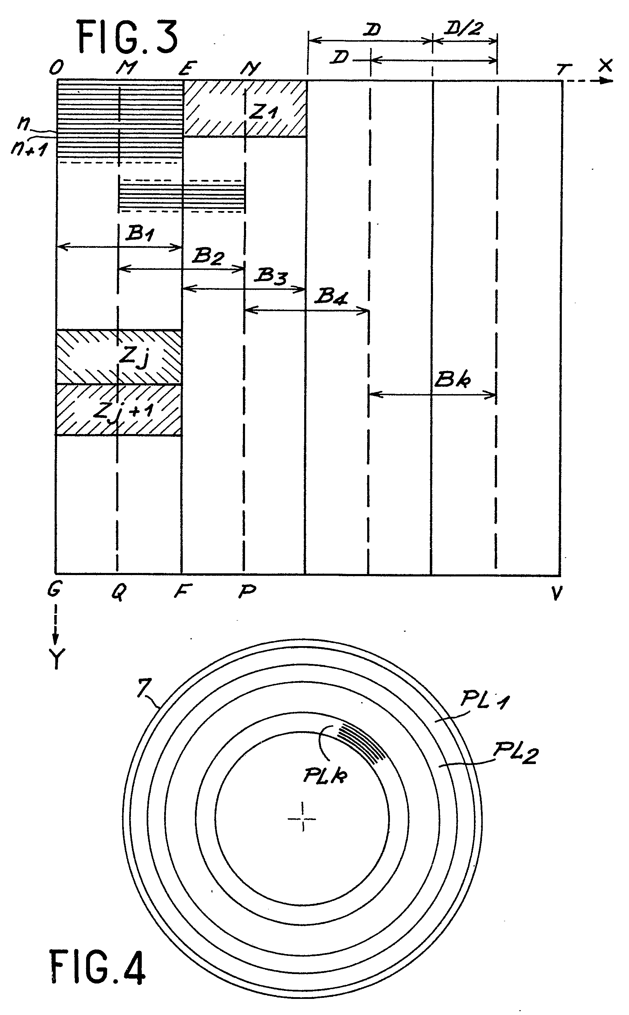

Les figures 3 et 4 illustrent le procédé de découpe de la carte en zones produit lors de l'enregistrement, lequel s'effectue selon des techniques connues à l'aide d'une caméra de télévision, la carte étant disposée sur une table déplacée en X et en Y. La direction Y correspond à celle des méridiens géographiques. La carte OTVG est considérée décomposée en deux réseaux de bandes adjacentes et parallèles à l'une des directions de référence et les réseaux étant décalés selon la deuxième direction de référence, en sorte que les bandes se chevauchent partiellement de l'une à la suivante. Une première bande B1 correspond à l'aire OEFG, la deuxième bande B2 à l'aire MNPQ qui comporte l'aire MEFQ, commune avec la précédente, et ainsi de suite. Les bandes impaires B1, B3... forment le premier réseau et les bandes paires B2, B4... le deuxième réseau. Le double découpage de carte produit par ces bandes a été différencié en indiquant les bandes impaires B1, B3... en trait plein et les bandes paires B2, B4... en trait pointillé. L'enregistrement s'effectue selon un balayage ligne par ligne, les lignes ayant la direction X orthogonale à celle des bandes. Les zones successives, chaque zone correspondant à une image de télévision de l'enregistrement, peuvent être prélevées en passant d'une bande à la suivante selon X ou bien en enregistrant d'abord le contenu de la bande B1 puis celui de la bande B2 et ainsi de suite selon Y. Cette dernière version est représentée sur les figures 3 et 4 où sont indiquées deux zones successives Zj et Zj + 1 de la bande B1, chaque zone comportant $n$ lignes de balayage. A chaque zone correspond une image enregistrée sur une spire du disque vidéo. L'enregistrement de la bande B1 se traduit par une plage PL1 sur le disque ; la plage PL2 correspond à la bande B2 suivante et ainsi de suite. En désignant par D la largeur des bandes selon X, le chevauchement est de préférence choisi égal à D/2 pour des raisons de symétrie. Le chevauchement permet, en coopération avec la mémoire intermédiaire, d'assurer la visualisation continue sur l'indicateur lors du franchissement de zone, comme il apparaîtra ultérieurement.

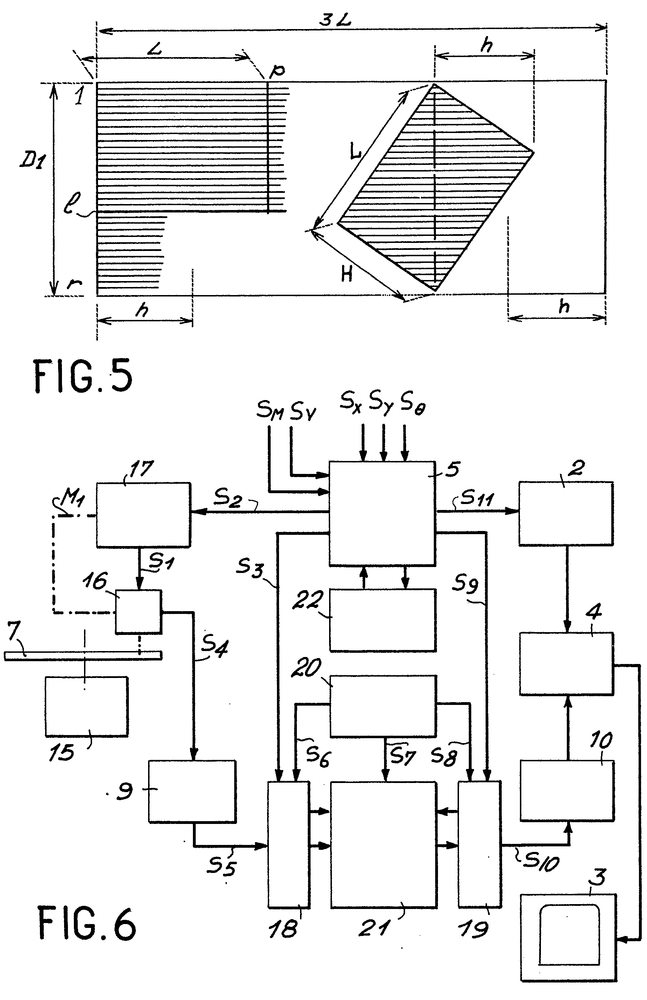

La mémoire intermédiaire 8 a une capacité déterminée pour stocker plusieurs images de base, l'image de base étant celle prévue pour la visualisation. Le nombre de cellules mémoires est égal à N.l.p.b.c. avec N nombres d'images de base, $l$ nombre de lignes de l'image de base et $p$ le nombre de points par ligne, $b$ le nombre de bits de luminance et $c$ dans le cas d'une visualisation en couleurs désignant le nombre de bits de chrominance. La mémoire 8 peut être d'un type à semiconducteurs avec accès aléatoire ou séquentiel à l'écriture et à la lecture des données stockées en lignes et points par lignes. Le nombre de nappes de N.l.p points est fonction du nombre de bits $b$ et $c$, par exemple quatre nappes permettent d'enregistrer 4 niveaux de luminance et 12 valeurs de chrominance. La capacité de la mémoire 8 tient compte de la rotation d'image à introduire par le paramètre de cap θ (navigation cap en haut) comme représenté sur la figure 5, le nombre $r$ de lignes stockées par nappe correspondant au moins à celui nécessaire pour contenir l'information de la diagonale D1 de l'image dont la valeur dimensionnelle est donnée par $\sqrt{L^2 + H^2}$, L étant la largeur l'image visualisée et H sa hauteur. Dans l'exemple figuré, il est considéré que le nombre $r$ de lignes correspond à une ou plusieurs images de zone Zj enregistrées sur le disque, et que la dimension D des bandes correspondant à la largeur des lignes est choisie égale à 3 fois celle L de l'image visualisée ; pour un rapport L/H égal à 4/3 par exemple, r = 5/3 l et le nombre N d'images de base stockées dans la mémoire sera égal à cinq.

Le nombre $r$ de lignes stockées est supérieur à celui l de l'image visualisée, ce qui procure une plage de débattement pour le mouvement en Y de la carte visualisée. Selon le sens du mouvement, la mémoire est rafraîchie avec des données provenant de la zone voisine Zj − 1 ou Zj + 1. Ainsi, pour un mouvement en Y dans le sens OY, la zone Zj + 1 sera progressivement introduite en mémoire, en remplacement des lignes supérieures de la zone Zj devenues inutiles. Ceci est obtenu par lecture des spires correspondantes du vidéo-disque en sélectionnant les l lignes utiles dans les images successives enregistrées.

De même, il apparaît que la capacité de la mémoire intermédiaire autorise une plage de variation pour le mouvement en X qui peut être déterminée par 3L-2h, h étant égal à $HL/Dl^2$ pour que l'image à visualiser reste comprise dans la zone mémorisée quel que soit le cap θ. Lorsque l'une de ces limites latérales est atteinte, il devient nécessaire de rafraîchir la mémoire avec les données correspondantes à la zone de recouvrement suivante. Ainsi, dans le cas d'un mouvement selon OX, les données de la zone Zj de la bande Bk + 1 sont prélevées pour remplacer celles de la zone Zj de la bande Bk ; compte tenu du recouvrement des bandes, le rafraîchissement correspond à la première moitié des lignes et ne provoque pas de discontinuité de la visualisation.

Les lignes mémorisées comportent 3p points chacune par conversion analogique-numérique et codage en 9 des signaux issus du vidéo-disque. L'unité de calcul et de gestion 5 élabore en fonction des paramètres X, Y et θ qui traduisent l'évolution de l'aéronef, les fractions des lignes à extraire de la mémoire 8 pour constituer à la lecture l'image de carte en défilement à visualiser, ainsi que les lignes ou fractions de lignes de zones successives à introduire à l'écriture pour rafraîchir continûment la mémoire.

Sur le diagramme de la figure 6, les mémoires sont représentées de manière plus détaillée. Le dispositif vidéo-disque, ou mémoire de masse, groupe le disque vidéo 7 avec son circuit d'entraînement en rotation 15 à vitesse constante, la tête de lecture 16 et un circuit de commande 17 associé pour commander le positionnement de la tête de lecture et le prélèvement par lecture optique d'informations enregistrées sur le disque. Le circuit 17 commande mécaniquement le positionnement radial de la tête 16 par une liaison mécanique M1 et électroniquement l'instant de prélèvement par la sortie S1. L'instant de prélèvement peut se situer au début d'un spire, c'est-à-dire à la première ligne d'une image enregistrée ou en cours de spire, c'est-à-dire à une ligne déterminée d'une image enregistrée. Cette dernière version correspond à effectuer un décalage fin en Y au niveau du vidéo-disque, le décalage zone par zone étant produit par l'entraînement mécanique M1. La sélection de ligne peut tout aussi bien s'opérer au niveau d'entrée écriture de la mémoire intermédiaire dans le cas de lecture du disque au début de chaque spire. Selon la solution adoptée, des signaux de commande correspondants S2 et S3 sont élaborés par le circuit de calcul et de gestion 5 qui peut être réalisé sous forme d'un microprocesseur recevant les informations SX, SY, Sθ sous forme numérique d'un calculateur de bord annexe non figuré. Le processeur 5 permet ainsi un accès quasi aléatoire à la mémoire de masse et le circuit 17 permet d'accéder à une image particulière, ou à une ligne particulière d'image.

La mémoire intermédiaire est symbolisée par un circuit 18 d'adressage et d'écriture, un circuit 19 d'adressage et de lecture, un circuit séquenceur 20 et la mémoire proprement dite 21. La sortie S4 du vidéo-disque est convertie en numérique point par point pour chaque ligne par le circuit 9 qui effectue le codage de la luminance et de la chrominance. Les données S5 ainsi élaborées sont transmises au circuit 18 qui associe à chaque point codé une adresse mémoire dont l'algorithme d'évolution est prédéterminé par le processeur de gestion 5 sous forme de signaux S3. Le séquenceur 20 distribue les priorités d'accès à la mémoire sous forme de signaux périodiques de commande S6, S7, S8. Le circuit de lecture 19 permet le prélèvement d'images à visualiser au rythme d'un standard de télévision quelconque, l'adresse de départ dans la mémoire étant initialisée par le processeur de gestion 5 et symbolisée par la liaison S9. La sortie S10 de la mémoire intermédiaire est transmise au circuit 10 permettant de reconstituer le signal vidéo avec les signaux de synchronisation trame et ligne et la chrominance pour alimenter le moniteur de télévision 3.

L'affichage simultané de symboles peut s'effectuer, par exemple, par incrustation au moyen du mélangeur 4. Le générateur de symboles 2 est commandé par la sortie S11 du processeur 5 pour délivrer les signaux des divers paramètres à afficher au cours du vol. Dans une mémoire de travail 22, sont préalablement stockées les données d'identification des différents symboles et caractères à produire au cours de la mission ainsi que leur position respective dans l'image. Le repère avion pourra être produit par exemple, au milieu et en bas de l'image visualisée en sorte que celle-ci corresponde principalement à la zone géographique dirigée vers l'avant de l'avion.

La réalisation de l'ensemble de calcul et de gestion 5 et de la mémoire intermédiaire 8, est considérée effectuée selon des techniques connues. En particulier, la programmation dépend du mode de découpe et d'enregistrement de zones et de l'organisation de la mémoire intermédiaire. Les moyens de calcul, tel un microprocesseur, reçoit les données de navigation ; position de l'avion (SX, SY), cap (S8) ainsi que d'autres données, notamment la vitesse de l'avion SV et le choix par le pilote du mode SM de représentation Nord ou Cap en haut ; il élabore à partir de ces données les coordonnées X, Y du centre de l'image à visualiser, l'angle polaire de la représentation et identifie les zones ou parties de zones à extraire du vidéo-disque.

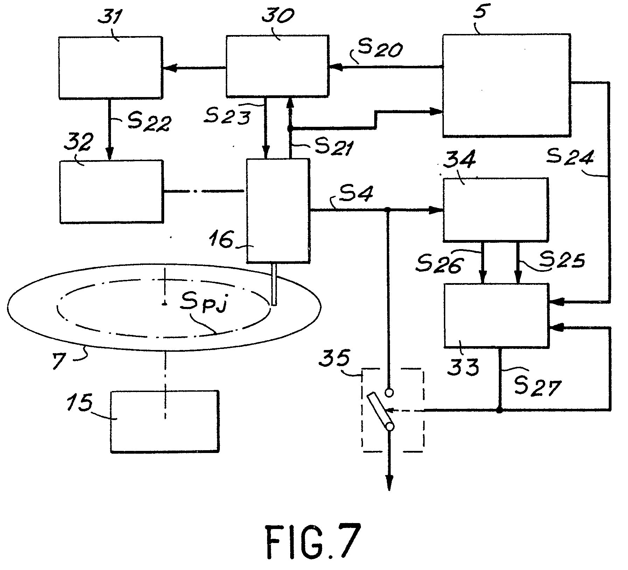

A titre indicatif, la figure 7 représente un diagramme de réalisation de la commande du vidéo-disque. L'information S20 d'image à sélectionner, c'est-à-dire de la spire SPj sur laquelle elle se trouve enregistrée, est fournie par le processeur 5 à un circuit logique 30 d'identification, tel un compteur-décompteur, où la donnée S20 est comparée à l'information S21 correspondante, fournie par la tête de lecture. La donnée S21 comporte le numéro d'image inscrite sur une partie réservée BC de la spire (Fig. 2) et traduit la position radiale de la tête de lecture. La sortie numérique du comparateur 30 est transformée en un signal analogique S22 qui alimente un asservissement de positionnement radial 32 de la tête 16. Lorsque celle-ci se trouve positionnée sur la spire SPj désirée, le signal d'erreur S22 s'annule et le circuit 30 délivre un signal d'autorisation de lecture S23 qui déclenche la production du signal de sortie S4 de la tête de lecture. Les autres circuits figurés ont trait à la sélection de ligne dans l'image enregistrée, considérée faite au niveau du vidéo-disque. L'information de calage radial est transmise au processeur 5 par le signal S21, ou de manière équivalente par la sortie du circuit 30. Dès que le positionnement radial est terminé, le circuit 5 délivre l'information numéro de ligne à sélectionner à un circuit compteur-décompteur 33. La sortie S4 du vidéo-disque est transmise à un circuit 34 d'extraction des signaux de trame S25 et de synchronisation S26. Le signal de trame déclenche le comptage des signaux de synchronisation jusqu'à coïncidence avec le numéro de ligne à sélectionner. A cet instant, la sortie 27 déclenche la fermeture du circuit de commutation 35 autorisant la transmission du signal S4 en aval vers la mémoire intermédiaire 8. Le signal S27 déclenche en outre l'arrêt et la remise à zéro du circuit 33. De manière analogue, la fin du prélèvement de l'enregistrement pourra être déclenchée en transmettant au circuit 33 une nouvelle information de ligne dans une image considérée, et produire après comptage une action inverse d'ouverture du circuit commutateur 35.

Le système indicateur cartographique décrit admet de nombreuses variantes conformes aux caractéristiques exposées. Une de ces variantes consiste notamment à enregistrer des zones Zj correspondant à l'image à visualiser,· les bandes étant de largeur L. Dans ce contexte, la capacité de la mémoire intermédiaire peut être réduite et correspondre à trois images de base par prélèvement de deux zones en Y sur deux bandes successives ; la gestion du système est déterminée en conséquence et se traduit par des rafraîchissements plus fréquents de la mémoire intermédiaire et par suite des accès plus nombreux au vidéo-disque. La solution à adopter résulte donc d'un compromis pour satisfaire à la fiabilité de fonctionnement avec une capacité limitée de la mémoire intermédiaire.

## Revendications

1. Dispositif indicateur cartographique, destiné à la navigation, plus particulièrement à la navigation aérienne, comportant : des moyens de stockage et de lecture de la carte enregistrée sous forme d'un signal vidéo adapté à la visualisation envisagée et de signaux codés de position ; des moyens générateurs de symboles dont un symbole de position véhicule, des moyens de visualisation cathodique de la vidéo de carte combinée avec des symboles ; des moyens de calcul et de gestion pour commander en fonction de la position véhicule d'une part, la lecture de la carte stockée et sélectionner la vidéo correspondant à la zone survolée et d'autre part, le générateur de symboles pour l'extraction des symboles à afficher ; et étant caractérisé en ce que les moyens de stockage et de lecture (1) sont réalisés sous forme d'un dispositif vidéo-disque où la carte est enregistrée zone par zone en décomposant la carte en deux réseaux de bandes adjacentes et parallèles à une première direction (Y) de référence, ces réseaux étant décalés l'un par rapport à l'autre selon la deuxième direction (X) de référence orthogonale à la précédente en sorte que les bandes respectives se chevauchent selon la direction de décalage, les signaux codés de position correspondant à la latitude et à la longitude de chaque zone, ledit signal vidéo de carte (S4) étant transmis à la visualisation à travers un dispositif mémoire intermédiaire (8) de capacité supérieure à celle de l'image visualisée pour permettre une visualisation sans discontinuité de la zone parcourue compte tenu du déplacement du véhicule.

2. Dispositif selon la revendication 1, caractérisé en ce que les moyens de commande et de gestion (5) assurent une commande aléatoire à l'écriture de la mémoire intermédiaire pour rafraîchir son contenu en fonction de l'évolution de la position avion et une commande séquentielle à la lecture pour l'extraction vidéo de l'image à visualiser.

3. Dispositif selon la revendication 1 ou 2, et dans lequel la visualisation est du type télévision ligne par ligne, caractérisé en ce que la direction des bandes est orthogonale à celle des lignes, chaque zone correspondant à l'enregistrement d'une spire sur le disque vidéo (7) du dispositif vidéodisque.

4. Dispositif selon la revendication 3, caractérisé en ce que la mémoire intermédiaire (8) est prévue pour un enregistrement ligne par ligne et point par point dans chaque ligne d'une image de carte comportant au moins une zone et en tenant compte d'un nombre prédéterminé de bits de luminance et de chrominance, et que le nombre de lignes (r) stockées dans cette mémoire est déterminée pour correspondre au moins à la diagonale (D1) de l'image à visualiser.

5. Dispositif selon la revendication 4, caractérisé en ce que les moyens de commande et de gestion (5) élaborent, à partir notamment des données de position latitude, longitude et cap du véhicule (SX, SY et Sθ), les données de commande (S2, S3, S9, S11), du dispositif vidéodisque (7) pour extraction de la vidéo de carte de rafraîchissement, de la mémoire intermédiaire (8) à l'écriture et à la lecture, et du générateur de symboles (2), pour produire le mode de représentation désiré NORD en haut ou CAP en haut de l'image visualisée sur un moniteur de télévision (3).

## Claims

1. A chartographic indicating device to be used in navigation, especially in aerial navigation, comprising : means for storing and reading a map recorded in the form of a video signal adapted to the type of visualization envisaged, and in the form of encoded position signals ; means for generating symbols, including a vehicle position symbol, cathode visualization means for visualizing the card video display in combination with symbols ; computing and regulating means for controlling in accordance with the vehicle position, on the one hand, the reading of the stored map and selecting the video display corresponding to the zone over which the vehicle flies, and, on the other hand, the symbol generator for extracting the symbols to be displayed, said device being characterized in that the storing and reading means (1) are constituted by videorecord device wherein the map is recorded zone by zone, decomposing the map into two grids of adjacent bands parallel to a first reference direction (Y), these grids being shifted with respect to one another in the second reference direction (X) orthogonal with respect to the previously mentioned direction, in such a manner that the respective bands overlap each other in the direction of said shifting, the encoded position signals corresponding to the latitude and the longitude of each zone, said video card signal (S4) being transmitted for visualization through an intermediary memorizing device (8) having a capacity greater than that of the visualized image, so as to allow for uninterrupted visualization of ·the traversed zone, taking into account the displacement of the vehicle.

2. A device according to claim 1, characterized in that the control and regulating means (5) ensure random control of the recording of the intermediary memorizing device so as to renew its contour in accordance with the evolution of the position of the airplane, and a sequential reading control for video-extraction of the image to be visualized.

3. A device according to claim 1 or 2, wherein the visualization is of the line-by-line television type, characterized in that the direction of the bands is orthogonal with respect to that of the lines, each zone corresponding to the recording of one turn on the videorecord (7) of said videorecord device.

4. A device according to claim 3, characterized in that the intermediary memorizing device (8) is adapted to effect line-by-line recording and point-by-point recording in each line of a map image comprising at least one zone, taking into account a predetermined number of luminance and chrominance bits, and in that the number of lines (r) stored in said memorizing device is determined so as to correspond at least to the diagonal (D1) of the image to be visualized.

5. A device according to claim 4, characterized in that the control and regulating means (5) produce, especially on the basis of the position values such as latitude, longitude and course of the vehicle (SX, SY and Sθ), the control data (S2, S3, S9, S11) of the videorecord device (7) for the extraction of the renewed map video image, for the intermediary memorizing device (8) between the recording and the reading, and for the symbol generator (2), so as to produce the desired mode of representation, « NORTH at the top » or « COURSE at the top » of image visualized on a television monitor (3).

**Ansprüche**

1. Kartographisches Anzeigegerät für die Navigation, insbesondere für die Flugnavigation, umfassend : Mittel zum Speichern und zur Wiedergabe der in Form eines zur gewünschten Sichtbarmachung geeigneten Videosignals und in Form verschlüsselter Positionssignale aufgenommenen Karte ; Symbolerzeugermittel zum Erzeugen von Symbolen, einschliesslich eines Fahrzeug-Positionssymbols, kathodische Mittel zum Sichbarmachen der Videostellung der Karte in Verbindung mit Symbolen ; Rechen- und Reguliermittel zum Steuern, in Abhängigkeit von der Fahrzeugposition, einerseits der Wiedergabe der gespeicherten Karte und zum Wählen der der überflogenen Zone entsprechenden Videodarstellung, und andererseits des Symbolerzeugers zwecks Ausziehens der anzuzeigenden Symbole, dadurch gekennzeichnet, dass die Speicher- und Wiedergabemittel (1) aus einem Videoplattengerät bestehen, vermittels dessen die Karte zonenweise unter Zerlegung der Karte in zwei Netze von benachbarten und zu einer ersten Bezugsrichtung (Y) parallelen Streifen aufgenommen wird, wobei diese Netze gegeneinander in der zur ersten Bezugsrichtung orthogonalen zweiten Bezugsrichtung (X) versetzt sind, so dass die betreffenden Streifen sich in der Richtung dieser Versetzung überlappen, und wobei die verschlüsselten Positionssignale der Breite und der Länge jeder Zone entsprechen, während das Kartenvideosignal (S4) an die Mittel zur Sichtbarmachung durch einen Zwischenspeicher (8) übertragen werden, dessen Kapazität grösser ist, als diejenige das betrachteten Bildes, um eine ununterbrochene Sichtbarmachung der durchfahrenen Zone unter Berücksichtigung der Fortbewegung des Fahrzeuges zu gestatten.

2. Gerät nach Anspruch 1, dadurch gekennzeichnet, dass die Steuer- und Reguliermittel (5) eine unbestimmte Steuerung der Aufnahme des Zwischenspeichers bewirken, um dessen Inhalt in Abhängigkeit von der Änderung der Flugzeugposition zu erneuern, sowie eine Wiedergabesequenzsteuerung zwecks Ausziehens der Videosignale des darzustellenden Bildes.

3. Gerät nach Anspruch 1 oder 2, bei die Sichtbarmachung nach dem Fernsehprinzip linienweise erfolgt, dadurch gekennzeichnet, dass die Richtung der Streifen in bezug auf die Richtung der Linien orthogonal ist, wobei jede Zone der Aufnahme einer Spirale auf der Videoplatte (7) des Videoplattengerätes entspricht.

4. Gerät nach Anspruch 3, dadurch gekennzeichnet, dass der Zwischenspeicher (8) für eine Aufnahme vorgesehen ist, die linienweise und für jede Linie punktweise erfolgt, bei einem Kartenbild, das mindestens eine Zone aufweist, wobei einer vorbestimmten Anzahl von Luminanz- und Chrominanzziffern Rechnung getragen wird, und das die Anzahl (r) der in diesem Speicher gespeicherten Linien derart gewählt wird, dass sie wenigstens der Diagonale (D1) des suchtbarzumachenden Bildes entspricht.

5. Gerät nach Anspruch 4, dadurch gekennzeichnet, dass die Steuer- und Reguliermittel (5) insbesondere ausgehend von die Fahrzeugposition bestimmden Breitenwerten, Längewerten und Fahrrichtung des Fahrzeugs (SX, SY, Sθ) die Steuerwerte (S2, S3, S9, S11) für das Videoplattengerät (8) erzeugt zwecks Ausziehens Kartenvideoerneuerung, für die Aufnahme und die Wiedergabe des Zwischenspeichers (8), sowie für den Symbolerzeuger (2), um die gewünschte Darstellungsweise, nähmlich « NORD oben » oder « FAHRRICHTUNG oben » im auf einem Fernsehkontrollgerät (3) erscheinenden Bild zu erzielen.

# FIG.1

# FIG.2

# FIG.3

# FIG.4

FIG.5

FIG.6

FIG.7